# EUROPÄISCHE PATENTANMELDUNG

(11) **EP 1 247 465 A2**
(43) Veröffentlichungstag der Anmeldung: **09.10.2002**
(21) Anmeldenummer: 02005462.3
(22) Anmeldetag: 09.03.2002
(51) Int. Cl.: A41B 17/00, A41D 1/00

(54) **Doppellagiges Bekleidungsstück**

(30) Priorität: 03.04.2001 AT 5352001
(71) Anmelder: Wolford Aktiengesellschaft, 6901 Bregenz (AT)
(72) Erfinder: Metzler, Josef, Ing., 6971 Hard (AT)
(74) Vertreter: Hefel, Herbert, Dipl.-Ing.

(57) **Zusammenfassung**

Bei einem doppellagiges Bekleidungsstück, das als Body, Shirt, Rock, Kleid, Hose, Jacke oder dergleichen ausgebildet ist, mit zumindest einem Vorderabschnitt und einem Rückenabschnitt, welches aus rundgestrickten Rohlingen hergestellt ist, sind die beiden Lagen (1, 2) zumindest des Vorderabschnitts und Rückenabschnitts des Bekleidungsstückes nahtlos und schlauchförmig aus elastischen und/oder unelastischen Garnen rundgestrickt und nur stellenweise miteinander verbunden.

## Beschreibung

Die Erfindung betrifft ein doppellagiges Bekleidungsstück, das als Body, Shirt, Rock, Kleid, Hose, Jacke o. dgl. ausgebildet ist und zumindest einen Vorderabschnitt und einen Rückenabschnitt aufweist, wobei das Bekleidungsstück aus rundgestrickten Rohlingen hergestellt ist.

Bei der Herstellung von bekannten Bekleidungsstücken dieser Art wurde bisher so vorgegangen, daß Schlauchware auf einer Rundstrickmaschine gestrickt, der aufgeschnittene Schlauch fallweise auf einem Spannrahmen vorfixiert und die Meterware sodann gefärbt und fixiert bzw. getrocknet wird. Danach wird die Ware gelegt und in der Konfektion mit Schablonen für die jeweiligen Vorder- und Rükkenteile, Ärmel usw. zugeschnitten. Bisher werden der Vorderabschnitt und der Rückenabschnitt durch seitliche Nähte miteinander verbunden. Dies ist einerseits arbeitsaufwendig, andererseits erweisen sich die Nähte beim Tragen als unangenehm.

Die Erfindung zielt nun darauf ab, ein doppellagiges Bekleidungsstück der einleitend angegebenen Art zu schaffen, welches einen einwandfreien Sitz (lose oder körpernah) gewährleistet und auf einfache sowie kostengünstige Weise in einem modernen Produktionsablauf hergestellt werden kann. Das erfindungsgemäße Kleidungsstück zeichnet sich dadurch aus, daß zumindest der Vorderteil und der Rückenteil nahtlos und schlauchförmig aus elastische und/oder unelastischen Garnen rundgestrickt ist und daß die beiden Lagen nur stellenweise miteinander verbunden sind.

Ein derartiges Bekleidungsstück kann in einem Arbeitsgang z. B. auf einer R/R-Jacquard-Strickmaschine hergestellt werden, wobei lediglich die Öffnungen im Oberschenkel-, Hüft- und Halsbereich geschnitten und konfektioniert werden müssen. Ein wesentlicher Vorteil der erfindungsgemäßen Ausbildung besteht darin, daß für die beiden Lagen muster- und funktionsbedingt unterschiedliche Materialien, Bindungen und Farbvarianten verwendet werden können; die beiden Lagen können beispielsweise opak und/oder transparent ausgeführt sein.

Aus der US-PS 6,158,254 und der US-PS 3,796,067 sind bereits doppellagige rundgestrickte Socken bekannt. Durch die Doppellagigkeit ergibt sich bei diesen Socken eine dickere Wandstärke, wodurch insbesondere bei Sportsocken eine verbesserte Aufnahme von Druckbelastungen vom Schuh sowie eine verbesserte Schweißabsorption erreicht wird. Bei derartigen Socken handelt es sich um ein Kleidungsstück, welches im Vergleich zum erfindungsgemäßen Kleidungsstück einer unterschiedlichen Gattung angehört und an das andere Anforderungen hinsichtlich der Funktionalität und der Paßform gestellt werden.

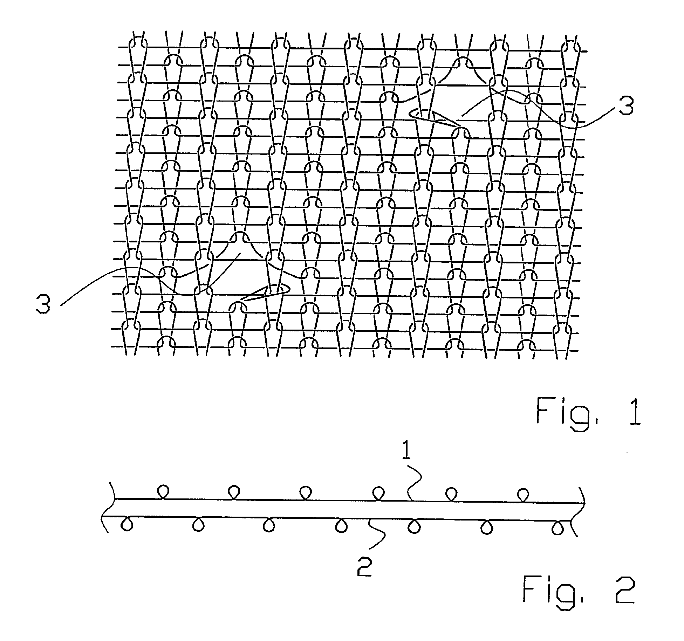

Ein Ausführungsbeispiel der Erfindung wird nachfolgend unter Bezugnahme auf die Zeichnung näher erläutert, die in Fig. 1 schematisch eine mögliche Bindungstechnik für das doppellagige Bekleidungsstück und in Fig. 2 einen schematischen Schnitt durch einen Teil des Bekleidungsstückes zeigt.

Gemäß der Zeichnung wird das erfindungsgemäße Kleidungsstück aus zwei gleichzeitig rundgestrickten Lagen bzw. Schläuchen 1, 2 aus z. B. Polyamidfäden hergestellt. Diese Lagen werden zur Bildung zumindest eines Vorderabschnittes und eines Rückenabschnittes an einzelne Stellen 3 miteinander verbunden, wie die Bindungstechnik gemäß Fig. 1 der Zeichnung zeigt. Es sind über die gesamte Ausdehnung des Vorder- und Rückenabschnitts des Kleidungsstücks voneinander beabstandete Verbindungsstellen 3 zwischen den beiden Lagen verteilt, wobei diese Verteilung gleichmäßig oder ungleichmäßig sein kann. Wie aus Fig. 1 ersichtlich ist, werden die Verbindungsstellen 3 durch zwischen den Lagen 1, 2 verlaufende Maschen von zumindest einer der Lagen 1, 2 gebildet. Die beiden Lagen 1, 2 sind also stricktechnisch miteinander verbunden, indem sie mittels zumindest einem Faden, aus dem die jeweilige Lage 1, 2 gebildet wird, miteinander verstrickt sind. Die erforderlichen Öffnungen im Hals-, Hüft- und Oberschenkelbereich werden konfektioniert.

Auf diese Weise entsteht ein Bekleidungsstück, das doppellagig ausgebildet ist, wobei die beiden Lagen 1, 2 durchaus unterschiedliche Struktur haben können, weil sie unterschiedliche Materialien, Farben und Bindungstechniken haben können.

Im Rahmen der Erfindung ist es auch möglich, die beiden Lagen des Bekleidungsstückes beispielsweise durch einen Bundrand miteinander zu verbinden.

## Patentansprüche

1. Doppellagiges Bekleidungsstück, das als Body, Shirt, Rock, Kleid, Hose, Jacke o. dgl. ausgebildet ist und zumindest einen Vorderabschnitt und einen Rückenabschnitt aufweist, wobei das Bekleidungsstück aus rundgestrickten Rohlingen hergestellt ist, **dadurch gekennzeichnet, daß** die beiden Lagen (1, 2) zumindest des Vorderabschnitts und Rückenabschnitts des Bekleidungsstückes nahtlos und schlauchförmig aus elastischen und/oder unelastischen Garnen rundgestrickt und nur stellenweise miteinander verbunden sind.

2. Bekleidungsstück nach Anspruch 1, **dadurch gekennzeichnet, daß** die beiden Lagen (1, 2) unterschiedliche Materialien und/oder Bindungen und/oder Farben aufweisen.

3. Bekleidungsstück nach Anspruch 1 oder Anspruch 2, **dadurch gekennzeichnet, daß** über die gesamte Ausdehnung des Vorder- und Rückenabschnitts voneinander beabstandete Verbindungsstellen (3) zwischen den beiden Lagen (1, 2) verteilt sind.

4. Bekleidungsstück nach Anspruch 3, **dadurch gekennzeichnet, daß** die Verbindungsstellen (3) über die Ausdehnung des Vorder- und Rückenabschnitts gleichmäßig verteilt sind.

5. Bekleidungsstück nach einem der Ansprüche 1 bis 4, **dadurch gekennzeichnet, daß** die Verbindungsstellen (3) durch zwischen den Lagen (1, 2) verlaufende Maschen aus einem Faden von zumindest einer der Lagen (1, 2) gebildet werden.
